# EUROPÄISCHE PATENTSCHRIFT

(11) **EP 3 180 983 B1**
(45) Veröffentlichungstag und Bekanntmachung des Hinweises auf die Patenterteilung: **27.01.2021**
(21) Anmeldenummer: 16203353.4
(22) Anmeldetag: 12.12.2016
(51) Int. Cl.: A21B 1/48, A21B 3/07

(54) **VORRICHTUNG ZUR WÄRMEBEHANDLUNG VON BACKGUT**
APPARATUS FOR THE HEAT TREATMENT OF BAKERY PRODUCTS
DISPOSITIF DE TRAITEMENT THERMIQUE DE PRODUIT À CUIRE

(30) Priorität: 14.12.2015 DE 102015225121
(43) Veröffentlichungstag der Anmeldung: 21.06.2017
(73) Patentinhaber: Werner & Pfleiderer Industrielle Backtechnik GmbH, 71732 Tamm (DE)
(72) Erfinder: Tschida, Josef, 71691 Freiberg (DE)
(74) Vertreter: Rau, Schneck & Hübner Patentanwälte Rechtsanwälte PartGmbB

(56) Entgegenhaltungen:
- EP-A2- 0 057 458
- WO-A1-2013/182396
- DE-A1- 2 262 888
- DE-A1- 4 221 531
- DE-C2- 2 803 223
- GB-A- 2 044 230
- US-A- 3 451 569

## Beschreibung

Der Inhalt der deutschen Patentanmeldung DE 10 2015 225 121.7 wird durch Bezugnahme hierin aufgenommen.

Die Erfindung betrifft eine Vorrichtung zur Wärmebehandlung von Backgut mit einer kontinuierlichen und geordneten Backgut-Ausgabe.

Backvorrichtungen sind aus der DE 42 21 531 A1, EP 0 057 458 A2, GB 2 044 230 A, WO 2013/182396 A1, US 3 451 569 A und DE 28 03 223 C2 bekannt.

Vorrichtungen zur Wärmebehandlung von Backgut sind als Tunnelöfen oder Tunneltrockner, die auch als Durchlauföfen oder -trockner bezeichnet werden, durch offenkundige Vorbenutzung aus dem Stand der Technik bekannt. Eine Übergabevorrichtung am ausgangsseitigem Ende eines Durchlaufofens mit einem Plattenbandförderer sind aus der DE-OS 22 62 888 bekannt. Nachteilig am Stand der Technik ist, dass keine kontinuierliche und geordnete Backgut-Abnahme von dem Plattenbandförderer möglich ist. Bei den bekannten Vorrichtungen findet eine Backgut-Abnahme im Umlenkbereich des Plattenbandförderers statt, problematisch ist, dass der Abstand zwischen dem Plattenbandförderer und einer Übergabevorrichtung sich kontinuierlich ändert. Somit muss der Abstand zwischen dem Plattenbandförderer und der Übergabevorrichtung kontinuierlich angepasst werden. Hierbei kommt es immer wieder zu Beschädigungen des Backguts sowie zu Unterbrechungen im Herstellungsprozess des Backguts aufgrund eines Rückstaus des Backguts an der Übergabevorrichtung.

Aufgabe der vorliegenden Erfindung ist es, eine betriebssichere und schonende Übergabe des Backguts von der ersten Fördereinrichtung hin zur Weitergabeeinrichtung zu gewährleisten.

Die Aufgabe wird erfindungsgemäß durch eine Vorrichtung gemäß Anspruch 1 gelöst. Weitere bevorzugte Ausführungsformen ergeben sich durch die Unteransprüche.

Die erfindungsgemäße Vorrichtung zur Wärmebehandlung von Backgut weist ein Backraum begrenzendes Gehäuse mit mindestens einer Heizeinrichtung zur Erwärmung des Backguts auf. Entgegen der Förderrichtung ist ein Aufgabeabschnitt, indem das Backgut auf eine erste Fördereinrichtung mit einem Endlos-Förderband aufgegeben wird, vorgesehen. In Förderrichtung ist ein Übergabeabschnitt, indem das Backgut zu einem Weitergabeabschnitt geführt wird, vorgesehen. Der Weitergabeabschnitt weist eine Weitergabeeinrichtung mit einem Übergabeelement auf. Die erste Fördereinrichtung weist ausgangsseitig mindestens zwei Umlenkrollen für das Endlos-Förderband auf, die vertikal und horizontal versetzt zueinander angeordnet sind. Hierbei ist eine der Umlenkrollen in Förderrichtung auf gleicher Höhe wie die Transportrollen der ersten Fördereinrichtung angeordnet. Zu dieser Umlenkrolle ist die andere Umlenkrolle nach unten und horizontal in Förderrichtung versetzt. Hierdurch wird ein schräger Förderwegabschnitt zwischen den beiden Umlenkrollen im Anschluss an einem durch die Transportrollen vorgegebenen Förderwegsabschnitt geschaffen. Das Übergabeelement der Weitergabeeinrichtung ist im Bereich, insbesondere eines Förderweg-Abschnitts, der ausgangsseitigen mindestens zwei Umlenkrollen angeordnet, wobei das Übergabeelement möglichst nah an dem Endlos-Förderband der ersten Fördereinrichtung ohne diese zu berühren angeordnet ist. Durch die vertikal und horizontal versetzt zueinander angeordneten Umlenkrollen wird ein ebener Förderweg-Abschnitt geschaffen, in dem das Endlos-Förderband der ersten Fördereinrichtung in einer linearen Bewegung geführt wird. Hierdurch wird ermöglicht, dass das Übergabeelement der Weitergabeeinrichtung möglichst nah an dem endlosen Förderband der ersten Fördereinrichtung ohne diese zu berühren und ohne den Abstand zu dem Endlos-Förderband auszugleichen angeordnet werden kann. Durch diese Anordnung wird eine kontinuierliche und geordnete Backgut-Aufnahme vom Förderband und Übergabe an die Weitergabeeinrichtung ermöglicht. Infolgedessen wird ein Rückstau des Backguts im Übergabeabschnitt vermieden und ein kontinuierlicher Herstellprozess des Backguts geschaffen. Während der Backgutübergabe verliert das Backgut nicht den Kontakt mit dem Endlos-Förderband der ersten Fördereinrichtung. Das Risiko einer Beschädigung des Backguts ist verringert.

Das Endlos-Förderband der ersten Fördereinrichtung ist als Plattenbandförderer ausgeführt. Hierdurch wird eine besonders bevorzugte Ausführungsform der Erfindung bereitgestellt.

Ein Förderband-Umlenkwinkel der in Förderrichtung erster Umlenkrolle ist im Bereich zwischen 10° und 45° vorgesehen. Hierdurch wird eine besonders bevorzugte Schräge im Übergabeabschnitt geschaffen, die an dem zu fördernden Backgut angepasst werden kann.

Ein gewünschter Förderband-Umlenkwinkel kann durch Verstellung eines Horizontalabstandes zwischen den mindestens zwei Umlenkrollen eingestellt werden. Eine derartige Winkeleinstellung kann angetrieben erfolgen. Eine derartige Winkeleinstellung kann mittels eines Verstellgetriebes erfolgen.

Gemäß Anspruch 2 besteht der Plattenbandförderer aus einem hitzebeständigen Material, insbesondere einem hitzebeständigen mineralischen Material, insbesondere Schamottstein oder dergleichen. Durch die Verwendung von hitzebeständigen, insbesondere feuerfesten Material, wird ein besonders robuster Plattenbandförderer bereitgestellt.

Gemäß Anspruch 3 ist ein Förderweg-Abschnitt der ersten Fördereinrichtung vorgesehen, der sich entlang einer förderbandseitigen Tangente der ausgangsseitig mindestens zwei Umlenkrollen erstreckt, wobei eine Erstreckung des Förderweg-Abschnitts in Förderrichtung den Abstand der Berührungspunkte der Tangente mit der in Förderrichtung ersten und letzten ausgangsseitigen Umlenkrolle entspricht, wobei die Erstreckung des Förderweg-Abschnitts größer ist als eine Erstreckung mindestens einer Förderplatte des Plattenbandförderers in Förderrichtung. Hierdurch wird sichergestellt, dass mindestens eine Förderplatte des Plattenbandförderers zumindest in einem Teilbereich des Förderweg-Abschnitts in einer linearen Bewegung geführt wird. Hierdurch wird eine besonders gute Backgut-Abnahme gewährleistet. Insbesondere dann, wenn das Backgut während der Phase der linearen Bewegung der mindestens einen Förderplatte des Plattenbandförderers mittels des Übergabeelements der Weitergabeeinrichtung von der Förderplatte abgenommen wird.

Gemäß Anspruch 4 ist die Erstreckung des Förderweg-Abschnitts der ersten Fördereinrichtung derart gewählt, dass diese größer ist als die Erstreckung mindestens zwei, insbesondere mindestens drei, insbesondere mindestens vier benachbarter Förderplatten des Plattenbandförderers in Förderrichtung. Hierdurch wird die Backgut-Abnahme vom Plattenbandförderer weiter verbessert.

Gemäß Anspruch 5 ist die Weitergabeeinrichtung als zweite Fördereinrichtung ausgeführt. Hierdurch kann das Backgut zu einer nächsten Verarbeitungseinheit gefördert werden.

Gemäß Anspruch 6 ist die zweite Fördereinrichtung der Weitergabeeinrichtung als Endlos-Bandförderer ausgeführt. Hierdurch wird eine besonders bevorzugte Ausführungsform der Weitergabeeinrichtung bereitgestellt. Gemäß Anspruch 7 weist der Bandförderer ein hitzebeständiges Förderband auf. Durch die Verwendung eines hitzebeständigen, insbesondere feuerfesten, Förderbandes wird ein besonders robuster Bandförderer bereitgestellt.

Gemäß Anspruch 8 ist das Übergabeelement der Weitergabeeinrichtung als ein Leitkanten-Element ausgeführt. In einer bevorzugten Ausführungsform kann das Leitkanten-Element als Messerkante, insbesondere als starre oder rotierende Messerkante oder als Messerkanten-Aufsatz, der dann das Leitkanten-Element darstellt, ausgeführt sein. Hierdurch wird eine besonders schonende Backgut-Übergabe gewährleistet.

In einer möglichen Ausführungsform ist die Vorrichtung gemäß den Ansprüchen 1 bis 8 Bestandteil einer Anlage zum Herstellen eines Backguts.

Folgend wird ist ein Ausführungsbeispiel der Erfindung anhand den Figuren 1 bis 3 dargestellt und erläutert, wobei dieses Ausführungsbeispiel als nicht einschränkend zu verstehen ist. In dieser zeigen:
- Fig. 1: eine teilweise geschnittene Darstellung eines Tunnelbackofens,
- Fig. 2: eine Darstellung des Übergabe- und Weitergabeabschnitts gemäß Fig. 1,
- Fig. 3: eine Darstellung der ausgangsseitigen Umlenkrollen mit den Förderwegs-Abschnitt der ersten Fördereinrichtung

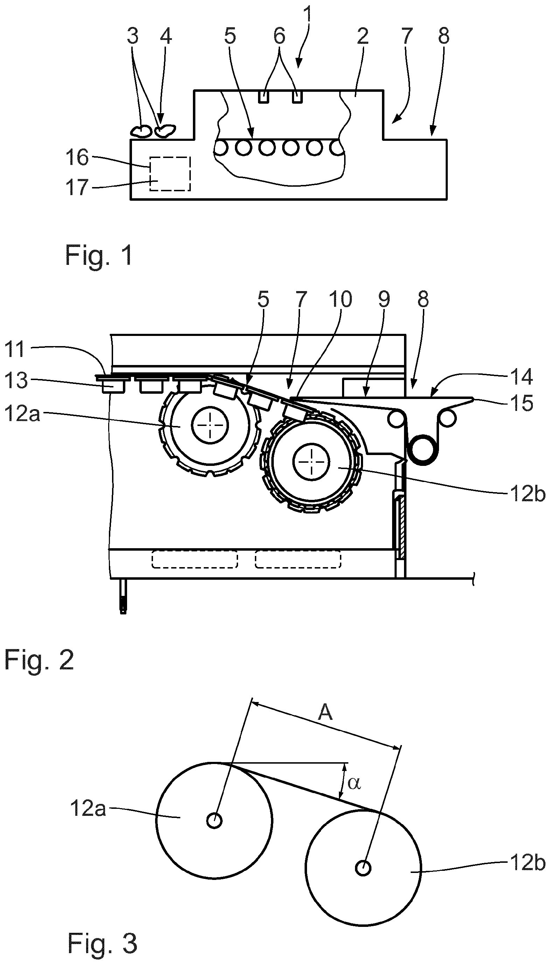

Figur 1 zeigt eine Vorrichtung 1 zur Wärmebehandlung von Backgut 3, die als Tunnelbackofen oder als Tunneltrockner ausgeführt ist. Die Vorrichtung 1 weist ein Backraum begrenzendes Gehäuse 2 mit mindestens einer Heizeinrichtung 6 zur Erwärmung des Backguts auf. Entgegen der Förderrichtung ist ein Aufgabeabschnitt 4 vorgesehen, indem das Backgut auf eine erste Fördereinrichtung 5 mit einem Endlos-Förderband 11 aufgegeben wird. Die erste Fördereinrichtung 5 fördert das Backgut 3 von dem Aufgabeabschnitt 4 zu einem Übergabeabschnitt 7. Im Übergabeabschnitt 7 wird das Backgut zu einem Weitergabeabschnitt 8 übergeben. Der Weitergabeabschnitt 8 weist, wie in Figur 2 zu sehen ist, eine Weitergabeeinrichtung 9 mit einem Übergabeelement 10 auf. Die erste Fördereinrichtung 5 und die mindestens eine Heizeinrichtung 6 stehen in Signalverbindung mit einer Steuereinheit 16 mit einem Speicherelement 17. Die Steuereinheit 16 steuert bzw. regelt die Geschwindigkeit des Endlos-Förderbands 11 der ersten Fördereinrichtung 5 sowie die Temperatur der mindestens einen Heizeinrichtung. In dem Speicherelement 17 können Prozessparameter von mehrere Back- und/oder Trockenverfahren gespeichert werden, so dass ein vollautomatischer Betrieb der Vorrichtung 1 ermöglicht wird. Die verschiedenen Back- und/oder Trockenverfahren können über eine nicht dargestellte Bedieneinheit, die in Signalverbindung mit der Steuereinheit steht, ausgewählt werden. Ferner kann das ausgewählte Back- und/oder Trockenverfahren über die Bedieneinheit von einem Benutzer überwacht werden, der gegebenenfalls manuell in dem Back- und/oder Trockenverfahren eingreifen kann.

Das Endlos-Förderband 11 der ersten Fördereinrichtung 5 ist als Plattenbandförderer ausgeführt. Der Plattenbandförderer besteht aus einem hitzebeständigen, insbesondere feuerfesten Material, wie zum Beispiel Eisen, Stahl, Aluminium sowie deren Legierungen oder Keramiken oder mineralischen Materialien, wie zum Beispiel Schamottstein oder dergleichen. Es ist auch eine Beschichtung des Plattenbandförderers mit diesen Materialien möglich.

Die Heizeinrichtung 6 erzeugt Ober- und/oder Unterhitze zum backen und/oder trocknen des Backguts 3. Die Heizeinrichtung 6 kann sowohl elektrisch als auch mit einem Brennstoff, wie zum Beispiel Gas, Diesel oder dergleichen, betrieben werden, wobei auch eine Kombination aus elektrisch und mit Brennstoff betriebenen Heizeinrichtungen möglich ist.

In einer bevorzugten Ausführungsform ist eine nicht dargestellte Umlufteinrichtung vorgesehen, die einen Konventionsstrom der heißen Gase innerhalb des Gehäuses 2 erzeugt. Hierdurch kann der Backprozess individuell an das Backgut angepasst werden.

Weiter können nicht dargestellte Beschwadungseinrichtungen vorgesehen sein, die das Backgut 3 mit kaltem oder heißem Wasser beschwaden. Hierdurch kann das Back-/Trockenergebnis optimiert werden.

Ferner können innerhalb des Gehäuses 2 mehrere Back- und/oder Trockenzonen mit unterschiedlichen Temperaturen vorhanden sein, um das Back-/Trockenergebnis weiter zu optimieren.

Figuren 2 und 3 zeigen eine detailliertere Ansicht des Übergabe- 7 und Weitergabeabschnitts 8. Im Übergabeabschnitt 7 sind mindestens zwei horizontal und vertikal versetzt zueinander angeordnete Umlenkrollen vorgesehen, die eine Richtungsänderungen des Endlos-Förderbands 11 der ersten Fördereinrichtung 5 bewirken. Durch die vertikale Versetzung der in Förderrichtung zweiten ausgangsseitigen Umlenkrolle 12b in Bezug zu der ersten ausgangsseitigen Umlenkrolle 12a entsteht ein Förderband-Umlenkwinkel α, der in Förderrichtung erster Umlenkrolle 12a im Bereich zwischen 10° und 45° liegt. Infolgedessen entsteht eine schräge Ebene im Übergabeabschnitt 7, in der das Endlos-Förderband 11 in einer linearen Bewegung geführt wird. In diesem Abschnitt ist eine in Förderrichtung angeordnete Weitergabeeinrichtung 9 mit einem Übergabeelement 10 vorgesehen. Das Übergabeelement 10 ist möglichst nah an dem endlosen Förderband 11 der ersten Fördereinrichtung 5, ohne diese zu berühren und ohne den Abstand zu dem Endlos-Förderband 11 auszugleichen, angeordnet. Ein Abstand zwischen dem Übergabeelement 10 und dem nächstliegenden Abschnitt des Endlos-Förderbandes 11 kann kleiner sein als 5 mm, kann kleiner sein als 3 mm, kann kleiner sein als 2 mm und kann auch kleiner sein als 1 mm. Die Weitergabeeinrichtung 9 ist als zweite Fördereinrichtung 14 ausgeführt, so dass das Backgut 3 zu einer in Förderrichtung nicht dargestellten benachbarten Weiterverarbeitungseinrichtung gefördert werden kann. Die zweite Fördereinrichtung 14 steht in Signalverbindung mit der Steuereinheit 16 und ist bevorzugt als Endlos-Bandförderer mit einem zweiten Endlos-Förderband 15 ausgeführt. Das zweite Endlos-Förderband 15 besteht aus einem hitzebeständigem, insbesondere feuerfestem, Material wie z. B. Kunststoff- und/ oder Gummigemischen. Für eine optimale Übergabe des Backguts von dem Endlos-Förderband 11 der ersten Fördereinrichtung 5 an die Weitergabeeinrichtung 9 ist das Übergabeelement 10 als Leitkanten-Element ausgeführt. Eine besonders vorteilhafte und Backgut schonende Übergabe wird durch ein als Messerkante ausgeführtes Übergabeelement 10 erreicht. Die Messerkante kann als starre oder rotierende Messerkante ausgeführt sein. Es kann ein Messerkanten-Aufsatz zum Einsatz kommen, der das zweite Endlos-Förderband 15 als Teil des Übergabeelements 10 hin zum Endlos-Förderband 11 verlängert.

Entlang einer förderbandseitigen Tangente der ausgangsseitigen mindestens zwei Umlenkrollen 12a, 12b erstreckt sich ein Förderweg-Abschnitt A, deren Erstreckung in Förderrichtung den Abstand der Berührungspunkte der Tangente mit der in Förderrichtung ersten und letzten ausgangsseitigen Umlenkrolle 12a, 12b entspricht. Ist das Endlos-Förderband 11 der ersten Fördereinrichtung 5 als Plattenbandförderer ausgeführt, ist die Erstreckung des Förderweg-Abschnitts A größer als eine Erstreckung mindestens einer Förderplatte 13 des Plattenbandförderers in Förderrichtung. Besonders bevorzugt wird, wenn die Erstreckung des Förderweg-Abschnitts A der ersten Fördereinrichtung 5 größer ist die Erstreckung mindestens zwei, insbesondere mindestens drei, insbesondere mindestens vier benachbarter Förderplatten 13 des Plattenbandförderers in Förderrichtung. Aufgrund dieser Erstreckung des Förderweg-Abschnitts A wird sichergestellt, dass mindestens eine Förderplatte 13 in einer linearen Bewegung in zumindest einem Teilbereich des Förderweg-Abschnitts A geführt wird. In diesem Teilbereich ist das Übergabeelement 10 angeordnet. Hierdurch bleibt der Abstand zwischen der mindestens einen Förderplatte 13 zu dem Übergabeelement 10 konstant. In der Phase der linearen Bewegung der mindestens einen Förderplatte 13 des Plattenbandförderers wird das Backgut 3 mittels des Übergabeelements 10 der Weitergabeeinrichtung 9 von der Förderplatte 13 abgenommen. Anschließend wird das Backgut 3 von der Weitergabeeinrichtung 9 zu einer nicht dargestellten Weiterverarbeitungseinrichtung gefördert.

## Patentansprüche

1. Vorrichtung zur Wärmebehandlung von Backgut mit
- einem Gehäuse (2), welches einen Backraum begrenzt,
- einer ersten Fördereinrichtung (5) mit einem endlosen Förderband (11) zum Fördern des Backguts (3) in einer Förderrichtung, wobei die erste Fördereinrichtung (5) ausgangsseitig mindestens zwei Umlenkrollen (12a, 12b) für das endlose Förderband (11) aufweist, die vertikal und horizontal versetzt zueinander angeordnet sind,
- einem Aufgabeabschnitt (4) zur Aufgabe des Backguts (3) auf die erste Fördereinrichtung (5),
- mindestens einer Heizeinrichtung (6) innerhalb des Gehäuses (2) zum Erwärmen des Backguts (3),
- einem Übergabeabschnitt (7) zur Übergabe des Backguts (3), wobei der Übergabeabschnitt (7) in Förderrichtung vorgesehen ist, sodass die erste Fördereinrichtung (5) das Backgut (3) vom Aufgabeabschnitt (4) durch den Backraum zum Übergabeabschnitt (7) fördert, und
- einem Weitergabeabschnitt (8) zur Weitergabe des Backguts (3), wobei
-- der Weitergabeabschnitt (8) ausgangsseitig in Förderrichtung benachbart zum Übergabeabschnitt (7) angeordnet ist und
-- eine Weitergabeeinrichtung (9) mit einem Übergabeelement (10) aufweist,
**dadurch gekennzeichnet, dass** der gewünschte Förderband-Umlenkwinkel durch Verstellung eines Horizontalabstandes zwischen den mindestens zwei Umlenkrollen (12a, 12b) zwischen 10° und 45° eingestellt werden kann, sodass der Winkel an das jeweils zu fördernde Backgut angepasst werden kann, und das Übergabeelement (10) der Weitergabeeinrichtung (9) im Bereich der ausgangsseitigen mindestens zwei Umlenkrollen (12a, 12b) angeordnet ist, wobei das Übergabeelement (10) möglichst nah an dem endlosen Förderband (11) der ersten Fördereinrichtung (5) ohne dieses zu berühren angeordnet ist und das Endlos-Förderband (11) der ersten Fördereinrichtung (5) als Plattenbandförderer ausgeführt ist.

2. Vorrichtung nach Anspruch 1, **dadurch gekennzeichnet, dass** der Plattenbandförderer aus einem hitzebeständigen Material besteht, insbesondere einem hitzebeständigem mineralischem Material, insbesondere Schamottstein oder dergleichen.

3. Vorrichtung nach Anspruch einem der vorherigen Ansprüche, **gekennzeichnet durch** einen Förderweg-Abschnitt (A) der ersten Fördereinrichtung (5), der sich entlang einer förderbandseitigen Tangente der ausgangsseitig mindestens zwei Umlenkrollen (12a, 12b) erstreckt, wobei eine Erstreckung des Förderweg-Abschnitts (A) in Förderichtung dem Abstand der Berührungspunkte der Tangente mit der in Förderrichtung ersten und letzten ausgangsseitigen Umlenkrolle (12a, 12b) entspricht, wobei die Erstreckung des Förderweg-Abschnitts (A) größer ist als eine Erstreckung mindestens einer Förderplatte (13) des Plattenbandförderers in Förderrichtung.

4. Vorrichtung nach Anspruch 3, **dadurch gekennzeichnet, dass** die Erstreckung des Förderweg-Abschnitts (A) der ersten Fördereinrichtung größer ist als die Erstreckung mindestens zwei, insbesondere mindestens drei, insbesondere mindestens vier benachbarter Förderplatten (15) des Plattenbandförderers in Förderrichtung.

5. Vorrichtung nach einem der vorherigen Ansprüche, **dadurch gekennzeichnet, dass** die Weitergabeeinrichtung (9) als zweite Fördereinrichtung (14) ausgeführt ist.

6. Vorrichtung nach Anspruch 5, **dadurch gekennzeichnet, dass** die zweite Fördereinrichtung (14) der Weitergabeeinrichtung (9) als Endlos-Bandförderer ausgeführt ist.

7. Vorrichtung nach Anspruch 6, **dadurch gekennzeichnet, dass** das Förderband (15) des Bandförderers ein hitzebeständiges Material aufweist.

8. Vorrichtung nach einem der vorherigen Ansprüche, **dadurch gekennzeichnet, dass** das Übergabeelement (10) der Weitergabeeinrichtung (9) als ein Leitkanten-Element ausgeführt ist oder ein Leitkanten-Element aufweist.

## Claims

1. Apparatus for the heat treatment of bakery products, having
- a housing (2), which bounds a baking compartment,
- a first conveyor device (5) having an endless conveyor belt (11) for conveying the bakery products (3) in a conveying direction, wherein the first conveyor device (5) has at least two deflecting pulleys (12a, 12b) on the output side for the endless conveyor belt (11), the deflecting pulleys being arranged opposite vertically and horizontally with respect to each other,
- a feeding portion (4) for feeding the bakery products (3) onto the first conveyor device (5),
- at least one heating device (6) within the housing (2) for heating the bakery products (3),
- a delivery portion (7) for delivering the bakery products (3), wherein the delivery portion (7) is provided in the conveying direction such that the first conveyor device (5) conveys the bakery products (3) from the feeding portion (4) through the baking compartment to the delivery portion (7), and
- a transfer portion (8) for transferring the bakery products (3), wherein
-- the transfer portion (8) is arranged on the output side in the conveying direction adjacent to the delivery portion (7) and
-- has a transfer device (9) with a delivery element (10),
**characterized in that**
the desired conveyor belt deflecting angle can be set between 10° and 45° by adjusting a horizontal distance between the at least two deflecting pulleys (12a, 12b), and therefore the angle can be adapted to the bakery products to be conveyed in each case, and the delivery element (10) of the transfer device (9) is arranged in the region of the at least two deflecting pulleys (12a, 12b) on the output side, wherein the delivery element (10) is arranged as close as possible to the endless conveyor belt (11) of the first conveyor device (5) without touching said conveyor belt, and the endless conveyor belt (11) of the first conveyor device (5) is in the form of a slat conveyor.

2. Apparatus according to Claim 1, **characterized in that** the slat conveyor is composed of a heat-resistant material, in particular a heat-resistant mineral material, in particular via clay brick or the like.

3. Apparatus according to one of the preceding claims, **characterized by** a conveyor path portion (A) of the first conveyor device (5), said conveyor path portion extending along a conveyor-belt-side tangent of the at least two deflecting pulleys (12a, 12b) on the output side, wherein an extent of the conveyor path portion (A) in the conveying direction corresponds to the distance between the contact points of the tangent with the first and last output-side deflecting pulley (12a, 12b) in the conveying direction, wherein the extent of the conveyor path portion (A) is greater than an extent of at least one conveyor plate (13) of the slat conveyor in the conveying direction.

4. Apparatus according to Claim 3, **characterized in that** the extent of the conveyor path portion (A) of the first conveyor device is greater than the extent of at least two, in particular at least three, in particular at least four adjacent conveyor plates (15) of the slat conveyor in the conveying direction.

5. Apparatus according to one of the preceding claims, **characterized in that** the transfer device (9) is designed as a second conveyor device (14).

6. Apparatus according to Claim 5, **characterized in that** the second conveyor device (14) of the transfer device (9) is designed as an endless belt conveyor.

7. Apparatus according to Claim 6, **characterized in that** the conveyor belt (15) of the belt conveyor has a heat-resistant material.

8. Apparatus according to one of the preceding claims, **characterized in that** the delivery element (10) of the transfer device (9) is designed as a leading-edge element or has a leading-edge element.

## Revendications

1. Dispositif de traitement thermique de produit à cuire avec
- un boîtier (2), lequel délimite une chambre de cuisson,
- un premier système de transport (5) avec une bande transporteuse (11) sans fin pour transporter le produit à cuire (3) dans une direction de transport, dans lequel le premier système de transport (5) présente côté sortie au moins deux poulies de renvoi (12a, 12b) pour la bande transporteuse (11) sans fin, qui sont disposées de manière décalée verticalement et horizontalement l'une par rapport à l'autre,
- une section de chargement (4) pour charger le produit à cuire (3) sur le premier système de transport (5),
- au moins un système de chauffage (6) à l'intérieur du boîtier (2) pour réchauffer le produit à cuire (3),
- une section de remise (7) pour remettre le produit à cuire (3), dans lequel la section de remise (7) est prévue dans la direction de transport de sorte que le premier système de transport (5) transporte le produit à cuire (3) de la section de chargement (4) à la section de remise (7) en passant par la chambre de cuisson, et
- une section de transfert (8) pour transférer le produit à cuire (3), dans lequel
-- la section de transfert (8) est disposée côté sortie de manière adjacente par rapport à la section de remise (7) dans la direction de transport, et-- présente un système de transfert (9) avec un élément de remise (10),
**caractérisé en ce que** l'angle de renvoi de bande transporteuse souhaité peut être réglé par l'ajustement d'un espacement horizontal entre les au moins deux poulies de renvoi (12a, 12b) entre 10° et 45° si bien que l'angle peut être adapté au produit à cuire à transporter respectivement et l'élément de remise (10) du système de transfert (9) est disposé dans la zone des au moins deux poulies de renvoi (12a, 12b) situées côté sortie, dans lequel l'élément de remise (10) est disposé de manière aussi proche que possible de la bande transporteuse (11) sans fin du premier système de transport (5) sans toucher celle-ci et la bande transporteuse sans fin (11) du premier système de transport (5) est réalisée en tant que transporteur à tabliers.

2. Dispositif selon la revendication 1, **caractérisé en ce que** le transporteur à tabliers est constitué d'un matériau résistant à la chaleur, en particulier d'un matériau minéral résistant à la chaleur, en particulier de brique réfractaire ou similaire.

3. Dispositif selon l'une quelconque des revendications précédentes, **caractérisé par** un tronçon de voie de transport (A) du premier système de transport (5), qui s'étend le long d'une tangente côté bande transporteuse des au moins deux poulies de renvoi (12a, 12b) côté sortie, dans lequel une extension du tronçon de voie de transport (A) correspond dans la direction de transport à l'espacement entre les points de contact de la tangente avec la première et la dernière poulie de renvoi (12a, 12b) situées côté sortie dans la direction de transport, dans lequel l'extension du tronçon de voie de transport (A) est plus grande qu'une extension d'au moins un tablier (13) du transporteur à tabliers.

4. Dispositif selon la revendication 3, **caractérisé en ce que** l'extension du tronçon de voie de transport (A) du premier dispositif de transport est plus grande que l'extension d'au moins deux, en particulier d'au moins trois, en particulier d'au moins quatre tabliers (15) adjacents du transporteur à tabliers dans la direction de transport.

5. Dispositif selon l'une quelconque des revendications précédentes, **caractérisé en ce que** le système de transfert (9) est réalisé en tant que deuxième système de transport (14).

6. Dispositif selon la revendication 5, **caractérisé en ce que** le deuxième système de transport (14) du système de transfert (9) est réalisé comme transporteur à bande sans fin.

7. Dispositif selon la revendication 6, **caractérisé en ce que** la bande transporteuse (15) du transporteur à bande présente un matériau résistant à la chaleur.

8. Dispositif selon l'une quelconque des revendications précédentes, **caractérisé en ce que** l'élément de remise (10) du système de transfert (9) est réalisé en tant qu'un élément à bords de guidage ou présente un élément à bords de guidage.
